# EUROPEAN PATENT SPECIFICATION

(11) **EP 1 880 984 B1**
(45) Date of publication and mention of the grant of the patent: **29.05.2013**
(21) Application number: 07111834.3
(22) Date of filing: 05.07.2007
(51) Int. Cl.: C04B 35/624, C04B 35/80, C04B 35/18, C04B 35/185, A61K 6/08, A61K 6/02, A61K 6/00, A61C 13/00, A61C 13/083

(54) **Oxide-based ceramic matrix composites**
Oxidbasierte keramische Matrixzusammensetzungen
Composites de matrice en céramique à base d' oxyde

(30) Priority: 21.07.2006 US 491359
(43) Date of publication of application: 23.01.2008
(73) Proprietor: The Boeing Company, Chicago, IL 60606-1596 (US)
(72) Inventor: Heng, Vann, Buena Park, CA 90621 (US); DiChiara, Robert A., Carlsbad, CA 92009 (US); Saragosa, Susan, Artesia, CA 90701 (US); Chu, Elizabeth, Mountain View, CA 94043 (US); Levi, Carlos G., Santa Barbara, CA 93111 (US); Zok, Frank W., Goleta, CA 93117 (US)
(74) Representative: Korenberg, Alexander Tal

(56) References cited:
- EP-A1- 1 281 697
- WO-A1-02/085618
- WO-A1-2007/014005
- WO-A1-2007/061398
- US-A1- 2005 084 665
- US-B2- 7 081 294
- JURF R A ET AL: "ADVANCES IN OXIDE-OXIDE CMC" JOURNAL OF ENGINEERING FOR GAS TURBINES AND POWER, ASME, NEW YORK, NY, US LNKD- DOI:10.1115/1.483195, vol. 122, no. 2, 1 April 2000 (2000-04-01) , pages 202-205, XP001119885 ISSN: 0742-4795

## Description

### BACKGROUND OF THE INVENTION

### 1. Field of the Invention

This invention relates to oxide-based ceramic matrix composites (CMC) and a method of making oxide-based ceramic matrix composites (CMC).

### 2. Background

Composites (also referred to as "composite materials") are made from two or more constituent materials that remain separate and distinct on a macroscopic level while forming a single component. Matrix (or "binder") and reinforcement(s) are two main constituents of composites. Matrix holds the reinforcement in an orderly pattern.

Reinforcement is stronger and stiffer than the matrix, and gives the composite its characteristic properties. Reinforcements impart special physical (mechanical and electrical) properties to enhance matrix properties. The matrix material surrounds and supports the reinforcement materials by maintaining their relative positions. The resulting synergy produces material properties unavailable from naturally occurring materials.

Carbon-fibre reinforced plastic (CRP); Glass-fibre reinforced plastic (GRP or "fiberglass"); thermoplastic composites; metal matrix composites ("MMCs") and Ceramic matrix composites (CMC) are some of the common types of composites.

CMC is formed of a ceramic matrix with fibers as reinforcements. CMC has relatively high mechanical strength at high temperatures. These materials withstand physically demanding conditions such as high temperature, corrosive conditions, oxidation and high acoustic environments.

Glass CMC, organo-metallic CMC and non-oxide CMC are some of the common known composites. These composites have restricted use due to various limitations. Glass CMC has restricted application because it is difficult to manufacture complex shapes with glass CMC. Organo-metallic ceramics are costly, have high dielectric constant and are susceptible to oxidation. Non-oxide CMC finds limited use as its matrix begins to crack at typically about 10 ksi (70MPa).

In recent years, oxide-based matrix ceramics (also referred to as "oxide CMC") capable of withstanding higher temperatures have been manufactured. One such oxide CMC has aluminum phosphate bonded alumina oxide CMC as matrix and Nicalon 8 harness satin fabric as reinforcement. However, this matrix suffered phase inversions in the matrix over temperatures of about 1400°F (760°C). Other oxide CMC exhibit desirable properties above 1400°F (760°C) but fail at temperatures beyond 2000°F (1100°C). Oxide CMCs operating beyond 2000°P (1100°C) (e.g. in space shuttles) are desirable.

Continuous improvements are being made to form oxide-based CMC exhibiting better thermal and structural stability at temperatures of at least upto 2400°F (1300°C).

Accordingly, it is desirable to manufacture CMCs of various shapes and sizes, which can withstand temperatures of over 2000°F (1100°C) without degradation. It is also desirable to provide an inexpensive method for manufacturing CMC having various sizes and shapes.

WO 2007/061398 A1 discloses a method of forming a CMC article or a composite article. A pressure P applied against a surface of the article during a sintering process is controlled to be high enough to resist a separation force between the plies of the CMC material caused by anisotropic shrinkage of the material and/or to resist a separation force caused by differential shrinkage between the CIVIC material and an adjoined monolithic ceramic material.

US 2005/0084665 A1 discloses a ceramic tile including a ceramic core material and an oxide CMC, where the ceramic core material has at least one surface covered by the oxide CMC,

EP 1 281 697 A1 discloses a CMC comprising a sol gel matrix with alumina particles mixed or blended in.

WO 02/085618 A1 discloses an oxide matrix composite and methods of making the CMC, including wet lay-up, prepreg and filament winding fabrication methods.

Jurf, A et al, 'Advances in Oxide-Oxide CMC' discloses recent advances in Composite Optics, Inc 's (COI's) oxide-oxide CMC materials including basic processing steps, updated material properties and fabrication techniques.

WO 2007/014005 A1 discloses a CMC material obtained by infusing a diffusion barrier layer into an existing porous matrix CMC to coat the exposed first matrix phase and fibers, and then densifying the matrix with repeated infiltrations cycles of a second matrix phase.

US 7 081 294 B2 discloses a ceramic composite having a web of reinforcement fibers and a matrix that substantially embeds the web after a firing step.

### SUMMARY OF THE PRESENT INVENTION

According to a first aspect of the invention, there is provided a mixture for forming the matrix of a ceramic matrix composite article, the mixture according to claim 1.

According to a second aspect of the invention, there is provided a method of making a ceramic matrix composite article, the method according to claim 8.

This brief summary has been provided so that the nature of the invention may be understood quickly. A more complete understanding of the invention can be obtained by reference to the following detailed description of the preferred embodiments thereof in connection with the attached drawings.

### BRIEF DESCRIPTION OF THE ACCOMPANYING DRAWINGS

The foregoing features and other features of the present invention will now be described with reference to the drawings of a preferred embodiment. In the drawings, the same components have the same reference numerals. The illustrated embodiment is intended to illustrate, but not to limit the invention. The drawings include the following figures.
Figure 1 shows process steps for preparing oxide-based ceramic matrix composite, according to one aspect of the present invention;
Figure 2A shows a flow chart for preparing mullite-alumina oxide-based ceramic matrix, according to one aspect of the present invention; and
Figure 2B shows a flow chart for preparing oxide CMC, according to one aspect of the present invention.

### DETAILED DESCRIPTION OF VARIOUS EMBODIMENTS

In one aspect of the present invention, an oxide-based CMC (also referred to as "oxide CMC") is provided. The oxide CMC of the present invention exhibits thermal and structural stability at temperatures beyond 2000°F (1100°C). The oxide CMC of the present invention has higher temperature resilience, improved damage resistance and less susceptibility to becoming embrittled at temperatures exceeding 2000°F (1100°C).

To facilitate an understanding of the oxide based CMC, its components, and method of preparation of oxide based CMC, a general overview of steps for forming the oxide based CMC will be described. The specific steps and components for forming the oxide based CMC will then be described with reference to the general method of forming oxide based CMC.

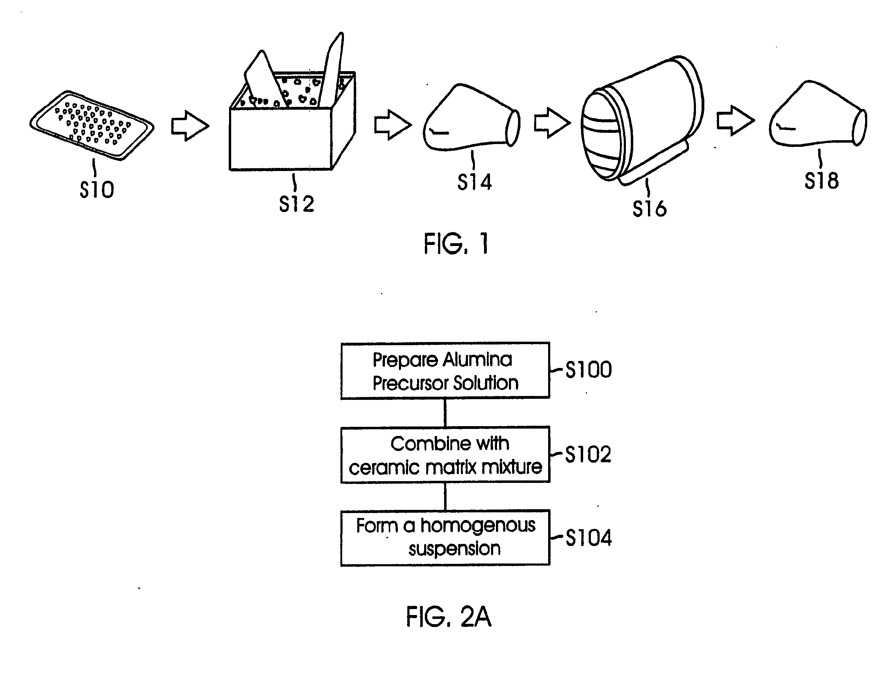

Figure 1 shows a top level block diagram for forming an oxide based CMC. In step S10, a ceramic fiber is selected. In step S12, the ceramic fiber is impregnated with ceramic powder slurry. In step S14, the impregnated fiber is draped on a tool. In step S16, the draped impregnated fiber is cured. In step S18, free standing firing is performed to form the oxide based CMC.

In an arrangement a ceramic powder slurry is formed from a mullite-alumina ceramic matrix (also called "ceramic matrix"). The ceramic matrix comprises an alumina precursor solution combined with a ceramic matrix mixture. The ceramic matrix mixture comprises about 10-70wt% mullite-alumina powder mixture, upto 25wt% binder, upto 20wt% emissivity agents and upto 1wt% antifoamer. Preferably, submicron alumina and submicron mullite powders are used. In mullite-alumina powder mixture, mullite to alumina ratio varies from 5/95 to 95/5, preferably powder mixture has 73.5 wt% mullite and 26.5 wt% alumina. Binder is preferably an organic binder, Polyvinylpyrrolidone (PVP).

Emissivity agents such as encapsulated silicon carbide (SiC), silicon tetraboride (SiB₄)or silicon hexaboride (SiB₆) may be incorporated into the powder slurry to increase surface emissivity. Other emissivity agents such as molybdenum disilicide (MoSi₂) and aluminum phosphate containing carbon may also be added to the ceramic matrix. In a preferred embodiment, the emissivity agents have a particle size between 1-50 microns. Antifoamer is preferably Dow Corning 1410.

In another aspect of the present invention, a method of preparing mullite-alumina ceramic matrix is provided. Figure 2A shows a flow diagram for method of making mullite-alumina ceramic matrix. In step S 100, an alumina precursor solution having density of about 0.5-5.00 gm/cm³ is prepared. For preparing alumina precursor solution, 50 to 500g aluminum chloride hexahydrate is dissolved into 50 to 1500g DI water. The mixture is heated in a reaction vessel with a cooled reflux condenser to 40-45°C. Aluminum powder of mesh size -40 to 325, ranging from 20 to 400g, of at least 99% purity, is added to the solution. Temperature of the solution is maintained at 65-75°C for about 12-15 hours. Solution is then filtered. Resulting alumina precursor solution is then concentrated to adjust the density of the solution to 0.5-2 gm/cm³.

In step S102, the alumina precursor solution is combined with the ceramic matrix mixture to form powder slurry. Preferably, alumina precursor solution of density 1.3 gm/cm³ is combined with ceramic matrix mixture. Ceramic matrix mixture comprises 10-70 wt% mullite-alumina powder mixture, 0-25wt% PVP, 0-20wt% of emissivity agent and 0-1wt% antifoamer.

In step S104, the ceramic powder slurry is made into a homogenous suspension by breaking up the soft-powder agglomerates. Methods of creating a homogenous suspension are well known in the art. Some examples include ball-milling, attrition milling, high-shear mixing and sonic milling. In a preferred embodiment, the mixture is ball-milled with alumina media. Preferably, the mixture is ball-milled for four hours to produce a homogenous non-agglomerated suspension of mullite-alumina ceramic matrix.

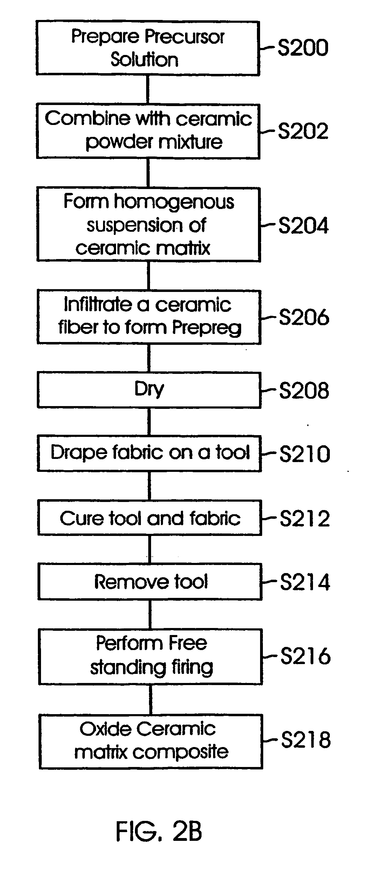

Figure 2B shows a flow diagram of a method for forming an oxide-based ceramic composite, according to one aspect of the present invention. In step S200, an alumina precursor solution of a desired density is prepared. In step S202, the alumina precursor solution is combined with mullite-alumina ceramic mixture to form powder slurry. In step S204, the ceramic powder slurry is ball milled for about 4 hours to form a homogenous suspension of mullite-alumina. ceramic matrix.

In step S206, the ceramic powder slurry is impregnated into various woven ceramic fiber cloths using any of the commonly used infiltrating methods to form a prepreg. For complete and uniform infiltration, doctor's blade or a pinched-roller set-up is used to form the prepreg. Ceramic fibers are chosen from 4-harness satin, 8-harness satin or plain weave of oxide fibers such as Nextel 312, Nextel 550, Nextel 610, Nextel 620, Nextel 650, Nextel 720, Altex or Almax Quartz, and non oxide fibers such as SiC fibers like Nicalon (CG, HiNicalon or Syramic) and Tyranno (SA or ZMI) . The preferred fibers for high-temperature use are, but not limited to, Nextel 720 or Tyranno SA.

In step S208, the prepreg fabric is dried to develop a tack and then draped on a desired complex tool in step S210 to form a prepreg fabric of desired thickness and shape. The tool and the prepreg fabric is then cured and becomes rigid in step S212. Curing is preferably done at 350°F (177°C) in a vacuum bag. Curing may be carried out with pressure, of about 30-100psi (210-690kPa), or without pressure, by using a press or an autoclave. Curing at 350°F (177°C) helps in removal of volatile components and the matrix starts to become rigid. The alumina precursor bonds the mullite and alumina powders together. Selection of process for drying and curing depends on size and shape of the tool.

In step S214, the tool is removed after 350°F (177°C) curing and the dried infiltrated part retains its desired shape. In step S216, free standing infiltrated part is sintered between 1500-2400°F (820-1300°C), preferably at 2200°F (1200°C), for about two hours, forming oxide CMC in step S218. Sintering of the free standing part does not use any special tooling. This reduces manufacturing cost. Sintering at high temperatures facilitates reaction between dried alumina precursor with the mullite and the alumina powder mixture, while completely volatizing organic components. This gives the CMC its high strength.

In a further embodiment, the steps of infiltrating, drying and curing can be repeated to achieve the desired density of the CMC. Bleeding of the composite can be done with bleeder plies if necessary to reduce matrix porosity and build-up at the surfaces.

Mullite and alumina powders both are high-temperature materials that do not sinter readily at temperatures above 2000°F (1100°C), thus preventing strong bonding to the fibers or even to themselves.

In oxide-based CMC of the present invention, mullite-alumina based matrix is porous and therefore, matrix and fibers have a weak interface. This weak interface deflects the cracks and distributes the load to other fibers, causing the cracks to absorb energy. This is the ideal fracture mechanism needed for CMCs to achieve higher toughness and to improve strength stability.

CMC material of present invention has many potential applications, especially for harsh environments, including spacecraft, aircraft and missiles. The potential applications include X-37, X-43, X-45, Shuttle, new reentry space vehicles, aircraft and missile and ground based turbines and other equipments using extreme environments.

The foregoing and other aspects of the teachings may be better understood in connection with the following examples, which are presented for purposes of illustration and not by way of limitation.

### Example 1: Prepare an alumina Precursor

The alumina precursor solution is made by dissolving 202.80 grams of reagent grade Aluminum Chloride Hexahydrate (AlCl₃-6H₂O) into 800 g DI water. The solution is heated in a reaction vessel with a cooled reflux condenser to 40-45°C. Approximately 113.28 grams of aluminum powder of -40 to +325 mesh with at least 99.8% purity is slowly added to the solution. As the aluminum powder reacts, an exothermic reaction occurs. After reaction is complete, the solution is kept at 65-75°C for ~12-15 hours. The solution is filtered and the concentration is adjusted to a density of~1.3-2.0 g/cm³.

### Example 2: Prepare Slurry

To make ceramic powder slurry for the CMC prepreg process, the alumina precursor solution at a density of 0.5 to 5.0 g/cm³ preferably 1.3 to 2.0 g/cm³, is combined with alumina powder (AKP-50 from Sumitomo Chemical Co. LTD) and mullite powder (KM101 from Kyoritsu Ceramic Materials or MU107 from Sowa Denko) at a concentration of 10-70 wt% powder, preferably 50 wt%. The mullite to alumina powder ratio varies from 5/95 to 95/5, preferably 73.5 wt% mullite and 26.5 wt% alumina. This mixture is combined with 0 to 25 wt%, preferably 15 wt% PVP (from Sigma Aldrich), 0-20% of emissivity agent (preferably 4-8 wt%), and 0 to 1 wt% Dow Corning 1410 (antifoamer).

### Example 3: Prepare Prepreg

Prepreg: The ceramic powder slurry is impregnated into a woven oxide cloth (4 or 8 hardness satin) such as Nextel 312, Nextel 440, Nextel 550, Nextel 720, Nextel 610 or a woven non-oxide cloth such Tyranno SA or Nicalon CG. The impregnation of the cloth is done using a doctor blade setup producing a wet prepreg.

### Example 4: Prepare Mullite-alumina ceramic matrix Composite

364.8 grams of alumina precursor solution (density 1.3 g/cm³) is combined with 111.8 grams of alumina powder (AKP-50), 316.8 grams of mullite powder (MU107), 66.6 grams of PVP (PVP-10), 40 grams of SiC powder, 140.0 grams DI water and 5 drops of antifoam Dow Corning 1410 and then ball milled for 4 hours to form a ceramic powder slurry.

The mixture is infiltrated into a woven oxide cloth (4 or 8 hardness satin) such as Nextel 312, Nextel 440, Nextel 550, Nextel 720, Nextel 610 or a woven non-oxide cloth such as Tyranno SA or Nicalon CG, using a doctor blade or a pinched roller set up to form a wet prepreg. The multiple plies of CMC prepreg are draped or laid up on complex tools, vacuum bagged having standard bleeders and breathers used in the organic composite industry and autoclaved to 350°F (177°C). After exposing the matrix to heat to set the matrix, the vacuum bag and tools are removed. The resulting part is post cured free standing between 1500°F (820°C) and 2400°F (1300°C), preferably 2200°F (1200°C).

### Example 5: Prepare Mullite-alumina ceramic matrix Composite

137 grams of alumina precursor solution (density 1.3 g/cm³) is combined with 42 grams of alumina powder (AKP-50), 119 grams of mullite powder (MU107) and 25 grams of PVP (PVP-10) and then ball milled for 4 hours to form ceramic powder slurry. The fabric is infiltrated by the same method as described in Example 1.

Those skilled in the art can now appreciate from the foregoing description that the broad teachings can be implemented in a variety of forms. Therefore, while the teachings have been described in connection with particular examples thereof, the true scope of the teachings should not be so limited since other modifications will become apparent to the skilled practitioner upon study of the specification, examples and following claims.

## Claims

1. A mixture for forming the matrix of a ceramic matrix composite article, the mixture comprising a ceramic powder mixture and an alumina precursor solution, wherein the ceramic powder mixture comprises:
between 10 wt% and 70 wt% mullite-alumina powder mixture; and
up to 25 wt% binder, the binder being polyvinylpyrrolidone.

2. A mixture as claimed in Claim 1, wherein the alumina precursor solution comprises the product of a reaction of aluminum chloride hexahydrate with aluminum powder in a heated aqueous environment.

3. A mixture as claimed in Claim 1, wherein the mullite-alumina powder mixture comprises mullite and alumina in a ratio between 5/95 and 95/5.

4. A mixture as claimed in Claim 1, wherein the ceramic powder mixture further comprises up to 20 wt% emissivity agent.

5. A mixture as claimed in Claim 1, wherein the ceramic powder mixture further comprises up to 1 wt% antifoamer.

6. A mixture as claimed in Claim 1, wherein the alumina precursor solution has a density between 0.5 g/cm³ and 5.0 g/cm³.

7. A ceramic matrix composite prepreg comprising ceramic fiber material impregnated with a mixture as claimed in any preceding claim.

8. A method of making a ceramic matrix composite article, the method comprising:
preparing an alumina precursor solution;
treating the alumina precursor solution with a ceramic powder mixture to form a mixture as claimed in any of claims 1 to 6;
forming a homogenous suspension of the mixture;
infiltrating the homogenous suspension into ceramic fiber material to form a prepreg; and
curing and sintering the prepreg to form the ceramic matrix composite article.

9. A method as claimed in claim 8, wherein the curing occurs at about 177°C (350°F) in a vacuum bag.

10. A method as claimed in claim 8, wherein the sintering occurs between 816°C (1500°F) and 1316°C (2400°F).

## Patentansprüche

1. Gemisch zum Bilden der Matrix eines keramischen Matrix-Verbundartikels, wobei das Gemisch ein keramisches Pulvergemisch und eine Aluminiumoxid-Vorläuferlösung umfasst, worin das keramische Pulvergemisch
zwischen 10 Gew.-% und 70 Gew.-% Mullit-Aluminiumoxid-Pulvergemisch; und
bis zu 25 Gew.-% Bindemittel umfasst, wobei das Bindemittel Polyvinylpyrrolidon ist.

2. Gemisch wie in Anspruch 1 beansprucht, worin die Aluminiumoxid-Vorläuferlösung das Produkt einer Umsetzung von Aluminiumchloridhexahydrat mit Aluminiumpulver in einer erwärmten wässerigen Umgebung umfasst.

3. Gemisch wie in Anspruch 1 beansprucht, worin das Mullit-Aluminiumoxid-Pulvergemisch Mullit und Aluminiumoxid in einem Verhältnis zwischen 5/95 und 95/5 umfasst.

4. Gemisch wie in Anspruch 1 beansprucht, worin das keramische Pulvergemisch ferner bis zu 20 Gew.-% Agens mit Emissionsvermögen umfasst.

5. Gemisch wie in Anspruch 1 beansprucht, worin das keramische Pulvergemisch ferner bis zu 1 Gew.-% Schaumverhinderungsmittel umfasst.

6. Gemisch wie in Anspruch 1 beansprucht, worin die Aluminiumoxid-Vorläuferlösung eine Dichte zwischen 0,5 g/cm³ und 5,0 g/cm³ hat.

7. Keramisches Matrix-Verbund-Prepreg, welches keramisches Fasermaterial, imprägniert mit einem Gemisch wie in einem vorangehenden Anspruch beansprucht, umfasst.

8. Verfahren zum Herstellen eines keramischen Matrix-Verbundartikels, welches Verfahren umfasst:
Herstellen einer Aluminiumoxid-Vorläuferlösung;
Behandeln der Aluminiumoxid-Vorläuferlösung mit einem keramischen Pulvergemisch, um ein Gemisch wie in einem von Ansprüchen 1 bis 6 beansprucht zu bilden;
Bilden einer homogenen Suspension aus dem Gemisch;
Infiltrieren der homogenen Suspension in keramisches Fasermaterial, um ein Prepreg zu bilden; und
Härten und Sintern des Prepregs, um den keramischen Matrix-Verbundartikel zu bilden.

9. Verfahren wie in Anspruch 8 beansprucht, worin das Härten bei etwa 177°C (350°F) in einem Vakuumsack stattfindet.

10. Verfahren wie in Anspruch 8 beansprucht, worin das Sintern zwischen 816°C (1500°F) und 1316°C (2400°F) stattfindet.

## Revendications

1. Mélange pour former la matrice d'un article composite de matrice céramique, le mélange comprenant un mélange de poudres céramiques et une solution de précurseur d'alumine, dans lequel le mélange de poudres céramiques comprend :
entre 10% en poids et 70% en poids d'un mélange de poudres mullite-alumine ; et
jusqu'à 25% en poids de liant, le liant étant le polyvinylpyrrolidone.

2. Mélange selon la revendication 1, dans lequel la solution de précurseur d'alumine comprend le produit d'une réaction de chlorure d'aluminium hexahydraté avec de la poudre d'aluminium dans un environnement aqueux chauffé.

3. Mélange selon la revendication 1, dans lequel le mélange de poudres mullite-alumine comprend de la mullite et de l'alumine dans un rapport compris entre 5/95 et 95/5.

4. Mélange selon la revendication 1, dans lequel le mélange de poudres céramiques comprend en outre jusqu'à 20% en poids d'agent d'émissivité.

5. Mélange selon la revendication 1, dans lequel le mélange de poudres céramiques comprend en outre jusqu'à 1% en poids d'antimousse.

6. Mélange selon la revendication 1, dans lequel la solution de précurseur d'alumine a une masse volumique comprise entre 0,5 g/cm³ et 5,0 g/cm³.

7. Préimprégné composite à matrice céramique comprenant un matériau de fibre céramique imprégné avec un mélange selon l'une quelconque des revendications précédentes.

8. Procédé de fabrication d'un article composite de matrice céramique, le procédé comprenant :
la préparation d'une solution de précurseur d'alumine ;
le traitement de la solution de précurseur d'alumine avec un mélange de poudres céramiques de façon à former un mélange selon l'une quelconque des revendications 1 à 6 ;
la formation d'une suspension homogène du mélange ;
l'infiltration de la suspension homogène dans le matériau de fibre céramique de façon à former un préimprégné ; et
le durcissement et le frittage du préimprégné de façon à former l'article composite de matrice céramique.

9. Procédé selon la revendication 8, dans lequel le durcissement se déroule à environ 177°C (350°F) dans une vessie à dépression.

10. Procédé selon la revendication 8, dans lequel le frittage se déroule entre 816°C (1500°F) et 1316°C (2400°F).
